# EUROPÄISCHE PATENTANMELDUNG

(11) **EP 4 414 868 A1**
(43) Veröffentlichungstag der Anmeldung: **14.08.2024**
(21) Anmeldenummer: 23155598.8
(22) Anmeldetag: 08.02.2023
(51) Int. Cl.: G06F 21/31

(54) **INITIIEREN EINER BERECHTIGUNGSPRÜFUNG FÜR EINE VIRTUELLE RÄUMLICHE UMGEBUNG**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft ein Verfahren zum Ausgeben einer Darstellung innerhalb einer virtuellen räumlichen Umgebung (61), mit den Schritten:
Ein Erfassen (S1) von Raumdaten, wobei die Raumdaten einen Nutzer (71) innerhalb der virtuellen räumlichen Umgebung spezifizieren,
ein Abrufen (S2) von Sicherheitsdaten (621), welche zugehörig zu den Raumdaten sind,
ein Initiieren (S3) einer Berechtigungsprüfung (623, 624) in Abhängigkeit von den Sicherheitsdaten (621),
wobei durch die Berechtigungsprüfung (623, 624) Nutzerberechtigungsdaten, welche dem Nutzer (71) zugehörig sind, generiert werden,
ein Empfangen (S4) der Nutzerberechtigungsdaten, und das Ausgeben (S5) der Darstellung innerhalb der virtuellen räumlichen Umgebung in Abhängigkeit der Nutzerberechtigungsdaten.

Außerdem betrifft die Erfindung ein Computerprogrammprodukt und ein computerlesbares Medium.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Verfahren zum Initiieren einer Berechtigungsprüfung für eine virtuelle räumliche Umgebung und zum anschließenden Ausgeben einer Darstellung innerhalb einer virtuellen räumlichen Umgebung. Außerdem betrifft die Erfindung ein zugehöriges Computerprogrammprodukt und ein zugehöriges computerlesbares Medium.

### Beschreibung des Stands der Technik

Unter Metaverse wird eine virtuelle Welt verstanden, in der ein Nutzer agieren kann, üblicherweise in Form einer Virtual-Reality- oder einer Augmented-Reality-Nutzerschnittstelle.

Künftig sollen mit dem Industrial Metaverse auch geschäftsrelevante industrielle Nutzung ermöglicht werden, insbesondere um simulierte oder reale industrielle Maschinen und Anlagen zu visualisieren und um eine Planung, Inbetriebnahme, Schulung, Betriebsoptimierung, Wartung, Diagnose oder Fehlersuche zu unterstützen.

Nutzer in einem solchen industriellen Metaverse haben dadurch Zugriff auf geschäftsrelevante Informationen, insbesondere Konstruktionsdaten und Betriebsdaten.

Von US2010229235A1, US8245283B2 "REGION ACCESS AUTHORIZATION IN A VIRTUAL ENVIRONMENT" (IBM) ist eine Zugangskontrolle zu Gebieten in einer virtuellen Welt für Avatare bekannt. ("The passage of avatars into and out of regions in a virtual universe is regulated through the use of secure communications between and among the avatar, an authority managing of the region and a trusted third party who maintains a database of avatar characteristics.; providing said avatar with a public key pair.").

Von US2010153722A1 "METHOD AND SYSTEM TO PROVE IDENTITY OF OWNER OF AN AVATAR IN VIRTUAL WORLD" (IBM) ist bekannt, dass der reale Nutzer einer Nutzer-Repräsentation in einer virtuellen Welt, d.h. ein Avatar eines Nutzers, authentisiert werden kann ("The present application provides an method and system for verifying a user's identity within a virtual world environment. The verification is to be in real-time and avoids the possibility of providing credential (e.g., biometric information) that were previously authentication, by sending to the user a time-sensitive challenge and requiring the user to provide the requested credentials (e.g., biometric information) within a predetermined time period.").

Von US10639551B2; US2011010675A1; US2017165578A1; US9610502B2 "Use of Real Time Location Information for User Authentication and Authorization in Virtual Environments" (IBM) ist bekannt, dass die Position eines Nutzers in der realen Welt und in der virtualisierten Welt in Kombination benutzt werden können, um einen Nutzer in der virtuellen Welt zu authentisieren ("authentication and verification of a user in a virtual world (VU) based upon such criteria as the physical location of a user in the real world and the logical location of the user's avatar in the VU.").

Von US2011066860A1 "Virtual World Embedded Security Watermarking" (IBM) ist bekannt, Avataren einer virtuellen Welt Security-Merkmale zuzuordnen ("...using watermarks to embed security features on avatars in a virtual world. A watermark engine receives security information for an avatar in a virtual world. The watermark engine creates a watermark for the avatar using the security information and associates the watermark with the avatar. The watermark may comprise at least one of: security preferences for the avatar, contact information for an owner of the avatar, and graphical information to cause alteration of the avatar when the avatar is recorded.") .

Eine Überwachung, ob in einer virtuellen Welt virtuelle Objekte mit Markenmerkmalen oder ähnlichen Merkmale von Original-Produkten auf unzulässige Weise vorliegen, ist von US2010269053A1 und US2022150071A1 bekannt (US2010269053A1 "METHOD FOR SECURITY AND MARKET SURVEILLANCE OF A VIRTUAL WORLD ASSET THROUGH INTERACTIONS WITH A REAL WORLD MONITORING CENTER" (IBM): "The method monitors at least one virtual world object in a virtual world, including detecting at least one virtual world event associated with the virtual world object. A notification of the virtual world event is received by a real-world operations center. In response to the receiving of the notification, the real-world operations center automatically sends the real-world response to an end user and/or the virtual world response to the virtual world. The real-world response includes a telephone call, a text message, an email, an audible alert, and/or a silent alert"; US2022150071A1 "SYSTEM AND METHOD FOR IDENTIFYING VIRTUAL GOODS" (Brand Therapy) "...mark to permit legitimate branded items in a virtual economy").

Der Online-Artikel von James Arlen, "Metaverse und IT-Security - was sich jetzt ändert", Security-Insider, 4.8.2022, beschreibt Security-Aspekte eines Metaverse, z.B. Datenschutz, Zusammenhang zwischen Authentisierung in der realen Welt und im Metaverse. Es wird empfohlen, dass Unternehmen, bevor sie auf das Metaverse setzen, "sich im Vorfeld Gedanken über mögliche Konsequenzen für die Datensicherheit und mögliche Sicherheitsrisiken machen".

Die Aufgabe der Erfindung besteht darin, eine Lösung für einen geschützten Zugang zu einem Metaverse und zu einer geschützten Nutzung des Metaverse entsprechend vorgebbarer Einschränkungen bereitzustellen.

### Zusammenfassung der Erfindung

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ausgeben einer Darstellung innerhalb einer virtuellen räumlichen Umgebung mit den Schritten:
Ein Erfassen von Raumdaten, wobei die Raumdaten einen Nutzer innerhalb der virtuellen räumlichen Umgebung spezifizieren,
ein Abrufen von Sicherheitsdaten, welche zugehörig zu den Raumdaten sind,
ein Initiieren einer Berechtigungsprüfung in Abhängigkeit von den Sicherheitsdaten,
wobei durch die Berechtigungsprüfung Nutzerberechtigungsdaten, welche dem Nutzer zugehörig sind, generiert werden,
ein Empfangen der Nutzerberechtigungsdaten, und das Ausgeben der Darstellung innerhalb der virtuellen räumlichen Umgebung in Abhängigkeit der Nutzerberechtigungsdaten.

Die virtuelle räumliche Umgebung ist auch als ein virtueller Raum oder eine virtuelle Welt bezeichenbar. Die virtuelle räumliche Umgebung ist insbesondere als ein Metaverse ausgebildet. Die virtuelle räumliche Umgebung ermöglicht einem Nutzer darin zu agieren, üblicherweise über eine Virtual-Reality- (VR-) oder eine Augmented-Reality-(AR-) Nutzerschnittstelle.

Unter der virtuellen räumlichen Umgebung, insbesondere Metaverse, wird eine Darstellung verstanden, die eine Mehrzahl von Objekt-Repräsentationen umfasst, insbesondere durch eine bildliche oder räumliche Visualisierung.

Das Initiieren ist auch als ein Anstoßen und/oder ein Veranlassen zu verstehen.

Abhängig von den Sicherheitsdaten, welche den Raumdaten, insbesondere dem mindestens einem Objekt im virtuellen Sichtfeld des Nutzers, wird die Berechtigungsprüfung des Nutzers initiiert. Ob ein Nutzer die Berechtigungsprüfung "bestanden" hat, ist in den Nutzerberechtigungsdaten widergespiegelt.

Ist die Berechtigungsprüfung erfolgreich, insbesondere ist eine Zwei-Faktor-Authentisierung des Nutzers erfolgreich und erfüllt das vom ihm verwendete Gerät vorgegebene Zero-Trust-Compliance-Vorgaben, so wird die Darstellung, insbesondere eine als vertraulich geltende Objekt-Repräsentation, dem Nutzer angezeigt.

Ein Aspekt der Erfindung besteht darin, eine Berechtigungsprüfung für eine virtuelle räumliche Umgebung dann zu initiieren, wenn Bedarf für eine bestimmte Darstellung in dieser virtuellen räumlichen Umgebung besteht.

Die Grundidee besteht darin, dass bei einer Nutzung einer virtuellen räumlichen Umgebung durch einen Nutzer abhängig von Raumdaten, eine Nutzerberechtigungsprüfung initiiert oder angestoßen wird. Abhängig von der Nutzerberechtigungsprüfung wird die Darstellung (insbesondere eine Maschine, welche statt verschwommen, klar dargestellt wird oder Türe, die sich öffnet) der virtuellen räumlichen Umgebung angepasst. Dadurch erfolgt ein Schutz spezieller Bereiche der virtuellen räumlichen Umgebung.

Insbesondere in einem industriellen Metaverse wird eine unzulässige Anzeige sensibler Informationen verhindert. Insbesondere ein Zero-Trust-Security-Modell und im Enterprise-Umfeld übliche Data Loss Prevention (Enterprise Digital Rights Management) schützen Zugriff auf sensible Informationen in einer virtuellen Metaverse-Welt.

Als konkrete Ausprägung können geschützte HMI-Elemente, insbesondere industrielle Panels zur Anzeige von Produktions- oder Maschinendaten mit einem Zugangsschutz, virtualisiert in einer Metaverse-Welt nachgebildet werden.

Weiterhin können physikalische Security-Schutzvorrichtungen zum Sabotageschutz oder Spionageschutz oder Objektschutz in einer virtuellen Metaverse-Welt virtuell nachgebildet werden.

In einer Weiterbildung der Erfindung spezifizieren die Raumdaten den Nutzer außerdem relativ zu mindestens einem Objekt innerhalb der virtuellen räumlichen Umgebung.

Das mindestens eine Objekt ist als mindestens ein virtuelles Objekt ausgebildet. Es wird insbesondere über eine mindestens eine Objekt-Repräsentationen innerhalb der virtuellen räumlichen Umgebung dargestellt.

Die Raumdaten spezifizieren den Nutzer somit innerhalb der virtuellen räumlichen Umgebung und zusätzlich relativ zu dem mindestens einem Objekt innerhalb der virtuellen räumlichen Umgebung. Die Sicherheitsdaten sind den Raumdaten im Gesamten zugehörig.

In einer weiteren Weiterbildung der Erfindung spezifizieren die Raumdaten den Nutzer innerhalb der virtuellen räumlichen Umgebung hinsichtlich:
einer aktuellen Position und/oder
einer Bewegung und/oder
einer Bewegungsrichtung und/oder
einer Blickrichtung und/oder
ein Blickfeld
des Nutzers.

Die aktuelle Position des Nutzers kann über für AR bekannte Verfahren erfasst werden. Dazu kann beispielsweise eine Bilderkennung erfolgen, oder eine Lokalisierung mittels eines satellitengestützen Navigationssystems wie z.B. GPS, Galileo, Glonass, Beidou, mittels eines RFID-basierten Lokalisierungssystems oder mittels eines Mobilfunksystems mit Lokalisierungsfunktionalität, z.B. ein 3G-, 4G- oder 5G-Mobilfunksystem. Ebenso ist es möglich, dass sich die aktuelle Position des Nutzers aus seiner Position in der virtuellen räumlichen Umgebung ergibt. Entsprechend kann auch die Bewegung, Bewegungsrichtung, Blickrichtung in der realen und/oder virtuellen räumlichen Umgebung ermittelt werden.

Die Bewegung umfasst insbesondere eine Nutzerinteraktion insbesondere relativ zu mindestens einem Objekt innerhalb der virtuellen räumlichen Umgebung.

Die Bewegungsrichtung spezifiziert den Nutzer insbesondere dahingehend, wie er sich in eine Richtung bewegt, insbesondere wie sich der Nutzer auf ein Objekt, insbesondere eine spezielle Maschine, zu bewegt.

Durch die Blickrichtung in Kombination mit der aktuellen Position des Nutzers spezifizieren die Raumdaten insbesondere das Blickfeld des Nutzers.

In einer weiteren Weiterbildung der Erfindung umfasst die Darstellung eine Anzeige von:
Daten und/oder
einer Maschine und/oder
einer Anlage und/oder
geschäftsrelevanter Information und/oder
Produktionsdaten und/oder
Planungsdaten und/oder
Wartungsdaten und/oder
Diagnosedaten und/oder
Fehlerdaten und/oder
Simulationsdaten und/oder
Konstruktionsdaten und/oder
Betriebsdaten.

Dies hat den Vorteil, dass eine industrielle Nutzung ermöglicht wird, insbesondere um simulierte oder reale industrielle Maschinen und Anlagen zu visualisieren und um eine Planung, Inbetriebnahme, Betriebsoptimierung, Wartung, Diagnose oder Fehlersuche zu unterstützen.

In einer weiteren Weiterbildung der Erfindung wird durch das Ausgeben der Darstellung:
eine angepasste Darstellung und/oder
eine visuell gefilterte Darstellung und/oder
eine weichgezeichnete Darstellung und/oder
ein Umriss und/oder
eine Darstellung in definierter Auflösung und/oder
eine Darstellung umfassend ein definiertes Farbspektrum ausgegeben.

Das Ausgeben der Darstellung umfasst somit insbesondere: eine Maschine, die nicht klar angezeigt wird, und/oder eine Türe, die zuvor verschlossen war und sich öffnet, und/oder
ein Objekt, dass nur in gefilterter Form, insbesondere unscharf, ausgegeben wird, und/oder
eine Darstellung, die spezielle Objekte explizit nicht anzeigt, andere Objekte aber schon anzeigt, und/oder eine Darstellung in modifizierten eingeschränkten Farben, insbesondere nur Graustufen, (dies entspricht dem definierten Farbspektrum) dargestellt.

In einer weiteren Weiterbildung der Erfindung umfasst das Verfahren den weiteren Schritt:
Ein Vergeben einer Berechtigung innerhalb der virtuellen räumlichen Umgebung in Abhängigkeit der Nutzerberechtigungsdaten.

Die Berechtigung ist auch als ein Privileg für die virtuelle räumliche Umgebung bezeichenbar. Die Berechtigung beeinflusst insbesondere eine Möglichkeit, inwieweit ein Nutzer mit einem in der virtuellen Welt dargestelltes Objekt interagieren kann. Dies kann somit abhängig von den Nutzerberechtigungsdaten über die Sicherheitsdaten angepasst werden.

In einer weiteren Weiterbildung der Erfindung wird die Darstellung, welche ausgegeben wird, d.h. welche dem Nutzer angezeigt wird, aus einer Menge an möglichen Darstellungen ausgewählt.

Dadurch ist es weiterhin möglich, dass in der Menge an möglichen Darstellungen mehrere Varianten von Darstellungen, insbesondere einer Objekt-Repräsentation, vorliegen.

In einer weiteren Weiterbildung der Erfindung ist den möglichen Darstellungen, der Menge an möglichen Darstellungen, jeweils ein Schutzniveau zugeordnet.

Den mehreren Varianten der Darstellungen ist insbesondere jeweils ein unterschiedliches Schutzniveau zugeordnet ist (z.B. offen, intern, vertraulich, geheim zu handhaben). Über das Schutzniveau der Darstellung, wird je nach Nutzerberechtigungsdaten (Berechtigung des Nutzers), d.h. abhängig von der Berechtigungsprüfung des Nutzers eine der mehrere Varianten von Darstellungen zum Ausgeben und damit zur Anzeige für den Nutzer ausgewählt.

Das Schutzniveau hängt mit den Sicherheitsdaten, welche zugehörig zu den Raumdaten sind, insoweit zusammen, dass durch die Sicherheitsdaten für unterschiedliche Darstellungen derselben Raumdaten unterschiedliche Schutzniveaus definiert werden. So erfolgt insbesondere in jedem Fall ein Ausgeben der Darstellung auch bei einer schwachen Nutzerberechtigung.

In einer weiteren Weiterbildung der Erfindung sind die Nutzerberechtigungsdaten als:
Authentisierungsdaten und/oder
Verifikationsdaten,
welche dem Nutzer zugehörig sind, ausgebildet.

Die Berechtigungsprüfung ist somit insbesondere als eine Authentisierung des Nutzers ausgebildet.

In einer weiteren Weiterbildung der Erfindung umfasst die Berechtigungsprüfung:
Eine Authentisierung des Nutzers und/oder
eine Zwei-Faktor-Authentisierung des Nutzers und/oder
eine Zero-Trust-Geräteprüfung eines verwendeten Geräts des Nutzers.

Konkret wird so durch die Raumdaten, insbesondere der Nutzerinteraktion oder Bewegung des Nutzers, in der virtuellen räumlichen Umgebung dazu führen, dass eine Authentisierung, insbesondere eine Zwei-Faktor-Nutzerauthentisierung über eine Chip-Karte oder ein mobiles Gerät, oder ein Zero-Trust-Device Compliance-Check des Nutzergeräts initiiert wird/angestoßen wird und damit erfolgt. Dadurch kann eine aufwendige Nutzerauthentisierung erst dann durchgeführt werden, wenn sie tatsächlich relevant ist, beispielsweise wenn sich der Nutzer einem sensiblen Bereich in der virtuellen räumlichen Darstellung nähert. Weiterhin hat dies den Vorteil, dass die Nutzerauthentisierung zeitlich nah bezogen auf eine sensible Nutzeraktion in der virtuellen räumlichen Welt erfolgt.

Weiterhin kann die Menge der Attribute (Authentisierung des Nutzers und/oder eine Zwei-Faktor-Authentisierung des Nutzers und/oder eine Zero-Trust-Geräteprüfung eines verwendeten Geräts), die die Berechtigungsprüfung umfasst, abhängig von der aktuellen Position oder Bewegung oder Blickrichtung (enthalten in den Raumdaten) in der virtuellen Welt angepasst werden.

In einer weiteren Weiterbildung der Erfindung sind die Sicherheitsdaten als:
eine Vertraulichkeitsstufe und/oder
eine Sicherheitsinformation und/oder
ein Sicherheitsattribut und/oder
ein Sicherheitslabel und/oder
eine Sicherheitsklassifikationsstufe und/oder
eine Anlagenklassifikationsstufe
ausgebildet.

Die Sicherheitsinformation ist auch als Security-Information bezeichenbar.

Das Sicherheitslabel ist auch als Security-Label bezeichenbar. Konkret können Instanzen der Sicherheitsdaten somit als "offen", "intern", "vertraulich", "geheim" ausgebildet sein.

Die Sicherheitsklassifikationsstufe ist Teil einer Sicherheitsklassifikationsskala. Konkret können Instanzen der Sicherheitsdaten somit als "C1", "C2", 'C3" ausgebildet sein.

Die Anlagenklassifikationsstufe ist auch als Asset-Classification-Stufe bezeichenbar. Sie ist Teil einer Analgensicherheitsklassifikationsskala. Konkret können Instanzen der Sicherheitsdaten somit als "C1", "C2", "C3" ausgebildet sein.

In einer weiteren Weiterbildung der Erfindung umfassen die Sicherheitsdaten:
Vertraulichkeitsanforderungen und/oder
Integritätsanforderungen und/oder
Verfügbarkeitsanforderungen.

Abhängig von den Sicherheitsdaten, welche den Raumdaten, insbesondere dem mindestens einem Objekt im virtuellen Sichtfeld des Nutzers, wird die Berechtigungsprüfung des Nutzers initiiert. Je höher die Vertraulichkeit und/oder je höher die Integritätsanforderungen und/oder je geringer die Verfügbarkeitsanforderungen desto eingeschränkter ein berechtigter Nutzerkreis, der Berechtigungsprüfung "besteht". Ob ein Nutzer die Berechtigungsprüfung "bestanden" hat, ist in den Nutzerberechtigungsdaten widergespiegelt.

In einer weiteren Weiterbildung der Erfindung wurden die Sicherheitsdaten aus zweiten Sicherheitsdaten ermittelt, wobei die zweiten Sicherheitsdaten zugehörig sind zu:
Generationsdaten und/oder
Konstruktionsdaten und/oder
Simulationsdaten und/oder
Betriebsdaten
der virtuellen räumlichen Umgebung und/oder dem mindestens einem Objekt innerhalb der virtuellen räumlichen Umgebung.

Die Sicherheitsdaten, welche zugehörig zu den Raumdaten sind, werden somit vorzugsweise automatisch aufgrund der zweiten Sicherheitsdaten ermittelt. Die zweiten Sicherheitsdaten sind Daten (auch als Ursprungsdaten bezeichenbar), die zur Bildung der virtuellen räumlichen Umgebung und/oder des mindestens einen Objekts (Objektrepräsentation) verwendet wurden (z.B. Generierungsrohdaten, Konstruktionsdaten, Simulationsdaten, Betriebsdaten), zugehörig. Die zweiten Sicherheitsdaten, d.h. die Ursprungsdaten, können in einer Variante in einem Produktdatenmanagementsystem oder einem Produktlebenszyklussystemsystem (Product Lifecycle Management System), z.B. Siemens Teamcenter, vorliegen.

Die zweiten Sicherheitsdaten sind ebenfalls insbesondere ausgebildet als:
eine zweite Vertraulichkeitsstufe und/oder
eine zweite Sicherheitsinformation und/oder
ein zweites Sicherheitsattribut und/oder
ein zweites Sicherheitslabel und/oder
eine zweite Sicherheitsklassifikationsstufe und/oder
eine zweite Anlagenklassifikationsstufe.

Dies hat den Vorteil, dass sich die zweiten Sicherheitsdaten, insbesondere die Security-Klassifizierung, der Ursprungsdaten auf die davon abhängig generierte Metaverse-Objektrepräsentation und damit die Sicherheitsdaten überträgt. Ansonsten müssten die Sicherheitsdaten den Raumdaten manuell zugeordnet werden, sobald die virtuelle räumliche Umgebung erstellt ist.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### Kurze Beschreibung der Zeichnungen

Die Besonderheiten und Vorteile der Erfindung werden aus den nachfolgenden Erläuterungen mehrerer Ausführungsbeispiele anhand der schematischen Zeichnungen ersichtlich.

Es zeigen
Fig. 1 eine schematische Darstellung eines industriellen cyber-physischen Systems, und
Fig. 2 ein Ablaufdiagramm des erfindungsgemäßen Verfahrens.

### Detaillierte Beschreibung der Erfindung

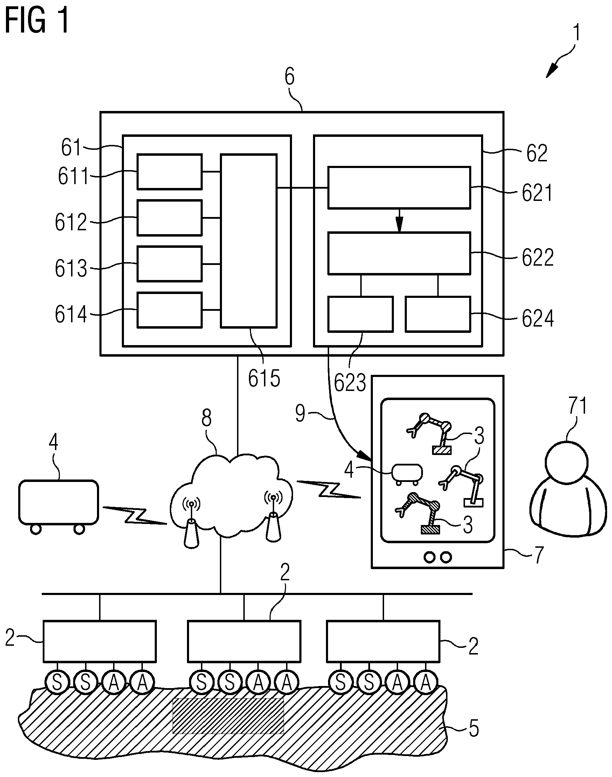

Fig. 1 zeigt ein industrielles cyber-physisches System 1 mit speicherprogrammierbaren Steuerungen 2 (PLC 2) zur Robotersteuerung 3 und einem führerlosen Transportfahrzeug 4 (AGV 4, automated guided vehicle 4). Die speicherprogrammierbaren Steuerungen 2 sind jeweils über Sensoren S und Aktoren mit der realen Welt 5 verbunden. Die speicherprogrammierbaren Steuerungen 2 sind über ein drahtloses Automatisierungsnetz 8 mit dem führerlosen Transportfahrzeug 4, einem Egde/Cloud Backend 6 und einem Nutzergerät 7 eines Nutzers 71 verbunden.

Zu diesem industriellem cyber-physischen System 1 liegt ein digitales Abbild 61 vor, ein sogenannter digitaler Zwilling 61 (Digital Twin 61, DT 61), der beispielsweise Konstruktions-/Projektierungsdaten 611, Simulationsdaten 612, Produktionsdaten 613 und Betriebsdaten 614 umfassen kann. Diese DT-Daten 611, 612, 613, 614 sind unterschiedlich kritisch, abhängig von ihrer Geschäftsrelevanz. Sie werden vorzugsweise automatisch durch einen Klassifikator in zweite Sicherheitsdaten 615 klassifiziert, z.B. nach C0, C1, C2 (offen, intern, vertraulich). Die über den Klassifikator klassifizierten DT-Daten 615 werden als sicherheits-gelabelte Metaverse Objekte 621, auch als Sicherheitsdaten 621 bezeichenbar, an einen Metaverse Service 62 weitergegeben.

Abhängig von diesen DT-Daten 621 bildet ein Metaverse-Service 62 eine virtuelle Welt (nicht dargestellt) mit virtuellen Metaverse-Objekten (nicht dargestellt), die den realen Komponenten zugeordnet sind (z.B. Roboter 3, AGV 4, Produktionsmaschinen) .

Ein Nutzer 71 interagiert 9 mit dem Metaverse-Service 62 über zumindest ein Nutzergerät 7 (MV Device 7), z.B. eine 3D-Brille 7, ein HMI-Panel 7, ein Tablet 7, ein Mobilgerät 7 oder ein Notebook 7. Für die Nutzerinteraktion 9 weist der Meterverse-Service 62 eine Metaverse-Nutzerinteraktions-Engine auf 622. Abhängig vom Security-Label 621, das einem Metaverse-Objekt zugeordnet ist bzw. das den Teildaten eines Metaverse-Objekts zugeordnet ist, wird ermittelt, inwieweit eine Anzeige und ein Beeinflussen der Nutzerobjekte durch den über eine Berechtigungsprüfung authentisierten 623 Nutzer zulässig ist. Abhängig von der Kritikalität des Metaverse-Objekts bzw. allgemein der Nutzerinteraktion 9 wird gegebenenfalls eine weitere Authentisierung des Nutzers durch die Berechtigungsprüfung 623 durchgeführt, und/oder es wird eine Zero-Trust-Device-Integritätsüberprüfung 624 als weitere Berechtigungsprüfung durchgeführt. Dadurch wird ermittelt, ob oder inwieweit in bestimmtes Metaverse-Gerät 7 zulässig ist, ob kritische Metaverse-Objekte anzuzeigen oder zu beeinflussen. Abhängig vom Zero-Trust-Prüfergebnis 624 wird die Handlungsmöglichkeit 9 des Nutzers 71 im Metaverse eingeschränkt. Dazu kann die Repräsentation von Metaverse-Objekten für diesen Nutzer 71 gesperrt, eingeschränkt oder angepasst werden.

Weiterhin ist es möglich, dass im Metaverse virtuelle Bedienpanels 7 ("virtual HMI" 7) vorgesehen sind, d.h. virtuelle Anzeigeelemente 7 (Displays 7), die den Systemzustand einer Maschine oder Anlage in der virtuellen räumlichen Welt anzeigen und die auch ein Beeinflussen ermöglichen können. Die auf einem solchen im Metaverse vorliegenden "virtuellen HMI" 7 (Metaverse-Objekt) angezeigten Informationen und Bedienelemente können entsprechend angepasst werden, d.h. abhängig von der Authentisierung 623 des Metaverse-Nutzers 71 und abhängig von der Zero-Trust-Geräteprüfung 624 des vom ihm verwendeten Metaverse-Geräts 7.

Weiterhin können im Metaverse virtuelle physikalische Zugangskontrollen vorgesehen sein, z.B. virtuelle Türen oder Sicherheitsschleusen. Diese können geöffnet oder gesperrt sein, abhängig der Authentisierung 623 des Metaverse-Nutzers 71 und abhängig von der Zero-Trust-Geräteprüfung 624 des vom ihm verwendeten Metaverse-Geräts 7.

Weiterhin können im Metaverse virtuelle Barrieren (z.B. Zaun, Wassergraben,) angebracht werden, die ein Überschreiten von gewissen Grenzen in der Metaverse-Welt abhängig der Authentisierung 623 des Metaverse-Nutzers 71 und abhängig von der Zero-Trust-Geräteprüfung 624 des vom ihm verwendeten Metaverse-Geräts 7 unterbinden.

Weiterhin können in der virtuellen Metaverse-Welt virtuelle Sichtschutzwände abhängig der Authentisierung 623 des Metaverse-Nutzers 71 und abhängig von der Zero-Trust-Geräteprüfung 624 des vom ihm verwendeten Metaverse-Geräts 7 angebracht werden, oder es können wechselnd transparente virtuelle Sichtschutzelemente davon abhängig optisch durchsichtig oder optisch trübe oder abgedunkelt geschaltet werden.

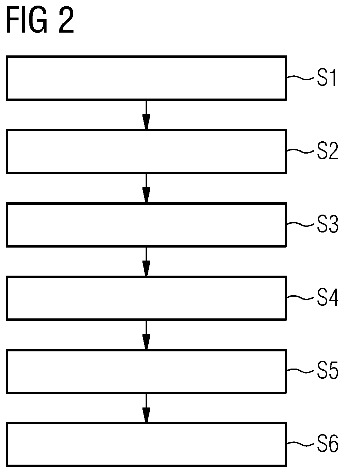

Fig. 2 zeigt ein Ablaufdiagramm des erfindungsgemäßen Verfahrens zum Ausgeben einer Darstellung innerhalb einer virtuellen räumlichen Umgebung,
mit den Schritten:
Schritt S1: Ein Erfassen von Raumdaten, wobei die Raumdaten einen Nutzer innerhalb der virtuellen räumlichen Umgebung spezifizieren,
Schritt S2: ein Abrufen von Sicherheitsdaten, welche zugehörig zu den Raumdaten sind,
Schritt S3: ein Initiieren einer Berechtigungsprüfung in Abhängigkeit von den Sicherheitsdaten,
wobei durch die Berechtigungsprüfung Nutzerberechtigungsdaten, welche dem Nutzer zugehörig sind, generiert werden, Schritt S4: ein Empfangen der Nutzerberechtigungsdaten, Schritt S5: das Ausgeben der Darstellung innerhalb der virtuellen räumlichen Umgebung in Abhängigkeit der Nutzerberechtigungsdaten und
Schritt S6: Ein Vergeben einer Berechtigung innerhalb der virtuellen räumlichen Umgebung in Abhängigkeit der Nutzerberechtigungsdaten.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ausgeben einer Darstellung innerhalb einer virtuellen räumlichen Umgebung,
mit den Schritten:
Ein Erfassen (S1) von Raumdaten, wobei die Raumdaten einen Nutzer (71) innerhalb der virtuellen räumlichen Umgebung spezifizieren,
ein Abrufen (S2) von Sicherheitsdaten (621), welche zugehörig zu den Raumdaten sind,
ein Initiieren (S3) einer Berechtigungsprüfung (623, 624) in Abhängigkeit von den Sicherheitsdaten (621),
wobei durch die Berechtigungsprüfung (623, 624) Nutzerberechtigungsdaten, welche dem Nutzer (71) zugehörig sind, generiert werden,
ein Empfangen (S4) der Nutzerberechtigungsdaten, und
das Ausgeben (S5) der Darstellung innerhalb der virtuellen räumlichen Umgebung in Abhängigkeit der Nutzerberechtigungsdaten.

2. Verfahren nach Anspruch 1,
wobei die Raumdaten den Nutzer (71) außerdem relativ zu mindestens einem Objekt innerhalb der virtuellen räumlichen Umgebung spezifizieren.

3. Verfahren nach einem der vorhergehenden Ansprüche,
wobei die Raumdaten den Nutzer (71) innerhalb der virtuellen räumlichen Umgebung hinsichtlich:
einer aktuellen Position und/oder
einer Bewegung und/oder
einer Bewegungsrichtung und/oder
einer Blickrichtung und/oder
ein Blickfeld
des Nutzers spezifizieren.

4. Verfahren nach einem der vorhergehenden Ansprüche,
wobei die Darstellung eine Anzeige von:
Daten (611, 612, 613, 614) und/oder
einer Maschine und/oder
einer Anlage und/oder
geschäftsrelevanter Information und/oder
Produktionsdaten (613) und/oder
Planungsdaten und/oder
Wartungsdaten und/oder
Diagnosedaten und/oder
Fehlerdaten und/oder
Simulationsdaten (612)
Konstruktionsdaten (611) und/oder
Betriebsdaten (614)
umfasst.

5. Verfahren nach einem der vorhergehenden Ansprüche,
wobei durch das Ausgeben der Darstellung ausgegeben wird:
eine angepasste Darstellung und/oder
eine visuell gefilterte Darstellung und/oder
eine weichgezeichnete Darstellung und/oder
ein Umriss und/oder
eine Darstellung in definierter Auflösung und/oder eine Darstellung umfassend ein definiertes Farbspektrum.

6. Verfahren nach einem der vorhergehenden Ansprüche,
mit dem weiteren Schritt (S6):
Ein Vergeben (S6) einer Berechtigung innerhalb der virtuellen räumlichen Umgebung in Abhängigkeit der Nutzerberechtigungsdaten.

7. Verfahren nach einem der vorhergehenden Ansprüche,
wobei die Darstellung, welche ausgegeben wird, ausgewählt wird aus:
einer Menge an möglichen Darstellungen.

8. Verfahren nach Anspruch 7,
wobei den möglichen Darstellungen, der Menge an möglichen Darstellungen, jeweils ein Schutzniveau zugeordnet ist.

9. Verfahren nach einem der vorhergehenden Ansprüche,
wobei die Nutzerberechtigungsdaten als:
Authentisierungsdaten und/oder
Verifikationsdaten,
welche dem Nutzer zugehörig sind, ausgebildet sind.

10. Verfahren nach einem der vorhergehenden Ansprüche,
wobei die Berechtigungsprüfung:
Eine Authentisierung (623) des Nutzers (71) und/oder eine Zwei-Faktor-Authentisierung des Nutzers (71) und/oder eine Zero-Trust-Geräteprüfung (624) eines verwendeten Geräts (7) des Nutzers (71)
umfasst.

11. Verfahren nach einem der vorhergehenden Ansprüche,
wobei die Sicherheitsdaten (621) als:
eine Vertraulichkeitsstufe und/oder
eine Sicherheitsinformation und/oder
ein Sicherheitsattribut und/oder
ein Sicherheitslabel und/oder
eine Sicherheitsklassifikationsstufe und/oder eine Anlagenklassifikationsstufe
ausgebildet sind.

12. Verfahren nach einem der vorhergehenden Ansprüche,
wobei die Sicherheitsdaten (621):
Vertraulichkeitsanforderungen und/oder
Integritätsanforderungen und/oder
Verfügbarkeitsanforderungen
umfassen.

13. Verfahren nach einem der vorhergehenden Ansprüche,
wobei die Sicherheitsdaten (621) aus zweiten Sicherheitsdaten (615) ermittelt wurden, wobei die zweiten Sicherheitsdaten (615) zugehörig sind zu:
Generationsdaten und/oder
Konstruktionsdaten und/oder
Simulationsdaten und/oder
Betriebsdaten und/oder
der virtuellen räumlichen Umgebung und/oder dem mindestens einem Objekt innerhalb der virtuellen räumlichen Umgebung.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
